# EUROPEAN PATENT APPLICATION

(11) **EP 1 932 688 A1**
(43) Date of publication of application: **18.06.2008**
(21) Application number: 07123097.3
(22) Date of filing: 13.12.2007
(51) Int. Cl.: B60C 17/00

(54) **Pneumatic run-flat tire**

(30) Priority: 15.12.2006 US 639722
(71) Applicant: THE GOODYEAR TIRE & RUBBER COMPANY, Akron, OH 44316-0001 (US)
(72) Inventor: Agostini, Giorgio, L-7733 Colmar-Berg (LU); Colantonio, Luigi Domenico, B-6600 Bastogne (BE); Corvasce, Filomeno Gennaro, L-9170 Mertzig (LU); Schreurs, Damien Albert, L-7260 Bereldange (LU); Pingenat, Matthieu, F-57330 Hettange Grande (FR); Lahure, Jean-Claude, L-1329 Luxembourg (LU); Hedo, Marc, L-7731 Colmar-Berg (LU); Peronnet-Paquin, Anne Therese, L-2154 Luxembourg (LU); Diaz-Scharfe, Mercedes Maria, L-7521 Mersch (LU); Lambert, Isabelle Lea Louise Marie, B-6700 Arlon (BE)
(74) Representative: Kutsch, Bernd

(57) **Abstract**

A pneumatic run-flat tire (10), the tire comprising at least one carcass reinforcing ply (12), at least one pair of sidewall inserts (20), and a belt reinforcing structure (22), wherein the tire has at least one pair of elastomeric layers (28) each located radially inward of the at least one carcass reinforcing ply (12) and radially outward of each of the sidewall inserts (20); the elastomeric layers extending from axially inward of an edge of the belt reinforcing structure (26) to at least a midpoint of a sidewall, the elastomeric layers comprising a rubber composition comprising 100 parts by weight of natural rubber; from 20 to 30 phr of silica; and from 1 to 20 phr of polyoctenamer.

## Description

### Background of the Invention

Pneumatic self-supporting run-flat tires have been commercialized for several years. A self-supporting run-flat tire is a tire that does not require any components, either located inside the tire cavity or external to the tire, to enable the tire to continue to operate during under-inflated conditions. Such tires are provided with internal sidewall inserts that stiffen the tire sidewalls and support the tire load during under-inflated operations.

However, the increased stiffness of the tire sidewalls can result in reduced comfort during both normal and underinflated operation. As the tire travels over road irregularities, vibrations are transferred through the stiff sidewall inserts to the vehicle, reducing ride comfort. Attempts have been made to optimize the Shore A and other hardness properties of the sidewall inserts to maximize comfort while maintaining run-flat characteristics. However, this is still a trade-off between two tire properties.

During such under-inflated operations, stress may occur between the sidewall inserts and the carcass ply cords, leading to degradation of the inserts and/or the carcass.

### Summary of the Invention

The present invention is directed to a pneumatic run-flat tire according to claim 1.

Dependent claims refer to preferred embodiments of the invention.

In a further preferred embodiment, the tire comprises at least one carcass reinforcing ply, at least one pair of sidewall wedge inserts, and a belt reinforcing structure, the belt reinforcing structure comprising at least a pair of cross cord belt reinforcing plies, wherein the tire has at least one pair of elastomeric layers each located radially inward of the at least one carcass reinforcing ply and radially outward of each of the sidewall wedge inserts; the elastomeric layers extending from axially inward of an edge of the belt reinforcing structure to at least a midpoint of a sidewall, the elastomeric layers comprising a rubber composition comprising:
100 parts by weight of natural rubber;
from 20 to 30 phr of silica; and
from 1 to 20 phr of polyoctenamer; wherein the rubber composition is exclusive or substantially exclusive of carbon black.

### Definitions

The following definitions are controlled for the disclosed invention.

"Apex" means an elastomeric filler located radially above the bead core and between the plies and the turn-up ends of the plies. The apex is sometimes referred to as a "bead filler".

"Aspect Ratio" (AR) means the ratio of the section height (SH) of a tire to its section width (SW). This term is also used to refer to the cross-sectional profile of the tire. A low-profile tire, for example, has a low aspect ratio.

"Axial" and "axially" are used herein to refer to lines or directions that are parallel to the axis of rotation of the tire.

"Bead" or "Bead Core" generally means that part of the tire comprising an annular tensile member of radially inner beads that are associated with holding the tire to the rim; the beads being wrapped by ply cords and shaped, with or without other reinforcement elements such as flippers, chippers, apexes or fillers, toe guards and chafers.

"Belt Structure" or "Reinforcement Belts" or "Belt Package" means at least two annular layers or plies of parallel cords, woven or unwoven, underlying the tread, unanchored to the bead, and preferably having both left and right cord angles in the preferred range from 17° to 27° relative to the equatorial plane (EP) of the tire.

"Bias ply tire" means a belted or circumferentially-restricted pneumatic tire in which at least one ply has cords which extend from bead to bead are laid at cord angles less than 65°, typically 15 to 40°, with respect to the equatorial plane (EP) of the tire.

"Breaker" means the same as "Belt structure".

"Carcass" means the tire structure apart from the belt structure, tread, undertread, and sidewall rubber over the plies, but including the beads.

"Circumferential" most often means circular lines or directions extending along the perimeter of the surface of the annular tread of the tire, perpendicular to the axial direction. It can also refer to the direction of the sets of adjacent circular curves whose radii define the axial curvature of the tread, as viewed in cross section.

"Cord" means one of the reinforcement strands, including fibers, with which the plies and belts are reinforced.

"Crown" or "Tire crown" means the tread, tread shoulders and adjacent portions of the sidewalls.

"Equatorial Plane" (EP) means the plane perpendicular to the tire's axis of rotation and passing through the center of its tread, or the plane containing the circumferential centerline of the tread.

"EMT tire" means "extended mobility technology tire," and can be used interchangeably with "runflat tire."

"Inner liner" means the layer or layers of elastomer or other material that form the inside surface of a tubeless tire and that contain the inflating fluid (e.g., air) within the tire.

"Lateral" means a direction parallel to the axial direction.

"Meridional" refers to a direction parallel to the axial direction but, more specifically, to a laterally disposed curved line that lies in a plane that includes the axis of the tire.

"NRD" means nominal rim diameter, which is substantially equal to the diameter of the tire at the inner surface of the bead region. It is the outside diameter of a rim upon which the tire is intended to be mounted.

"Ply" means a cord-reinforced layer of rubber-coated radially deployed, parallel cords.

"Radial" and "radially" mean directions radially toward or away from the axis of rotation of the tire.

"Radial ply structure" means the one or more carcass plies or which at least one ply has reinforcing cords oriented at an angle of between 65 and 90 degrees with respect to the equatorial plane (EP) of the tire.

"Radial ply tire" means a belted or circumferentially-restricted pneumatic tire in which at least one ply has cords which extend from bead to bead are laid at cord angles between 65 and 90 degrees with respect to the equatorial plane (EP) of the tire.

"Runflat" or "runflat tire" is a pneumatic tire that is designed to provide limited service while uninflated or underinflated.

"Section height" (SH) means the radial distance from the nominal rim diameter (NRD) to the outer diameter of the tire at its equatorial plane (EP).

"Section width" (SW) means the maximum linear distance parallel to the axis of the tire and between the exterior of its sidewalls when and after the tire has been inflated at normal pressure for 24 hours, but unloaded, excluding elevations of the sidewalls due to labeling, decoration or protective bands.

"Shoulder" means the upper portion of sidewall just below the lateral edge of the tread.

"Tread" means the ground-contacting portion of the tire.

"Turn-up" or "turn-up end" means the end portion of a carcass reinforcing ply that extends radially outward, beyond the bead core around which the ply is wrapped (typically 180°).

"Sidewall" means that portion of a tire between the tread region and the and the bead region.

### Brief Description of the Drawings

The invention will be described by way of example and with reference to the accompanying drawings in which:
FIG. 1 is a cross sectional view of one embodiment of a self-supporting run-flat tire in accordance with the present invention;
FIG. 2 is a cross sectional view another embodiment of a self-supporting run-flat tire in accordance with the present invention.

### Detailed Description of the Invention

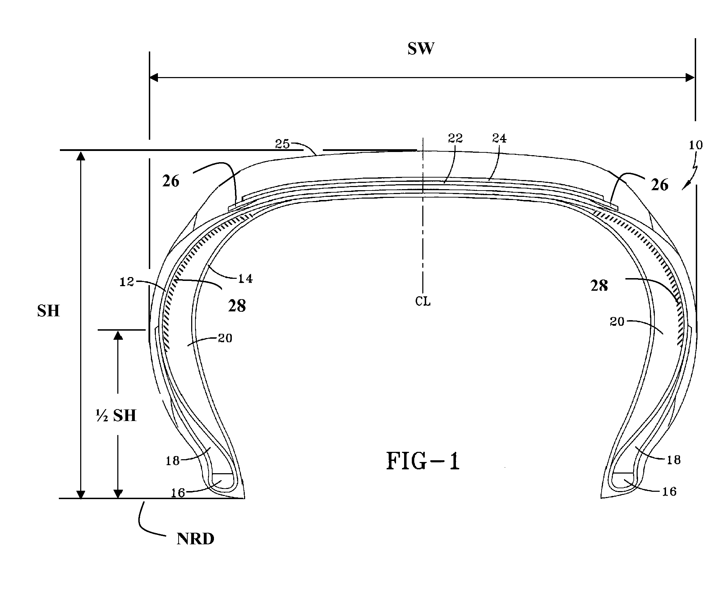

FIG. 1 illustrates a cross-sectional view of a self-supporting runflat tire 10 according to the present invention. Although not limited thereto, the illustrated tire 10 is of an intermediate aspect ratio. It has a carcass structure comprising a carcass reinforcing ply 12, a gas-impervious inner liner 14, a pair of beads 16, a pair of bead filler apexes 18, and a pair of sidewall wedge inserts 20. Each sidewall wedge insert 20 is located between the carcass reinforcing ply 12 and the inner liner 14. It will be appreciated by those skilled in the art that multiple reinforcing plies may be employed as carcass reinforcing plies, as well as multiple sidewall wedge inserts in a variety of configurations for both single and multiple carcass reinforcing plies.

Located radially outward of the carcass structure is a belt structure. The belt structure has at least two preferably cross cord reinforcing plies 22, 24. The plies 22, 24 are preferably inclined at angles of 18° to 35° relative to the tire centerline CL, with the cords in each ply 22, 24 being oppositely inclined relative to the cords in the adjacent ply. While not illustrated in FIG. 1, radially outward of the cross cord reinforcing plies 22, 24, an overlay ply may be placed. An overlay ply has cords inclined at approximately 0° relative to the tire centerline CL, and has an axial width greater than the widest cross cord reinforcing ply 22 or 24 so as to completely cover the edges of all the cross cord reinforcing plies 22, 24.

Radially outward of the belt structure is a tread 25. The tread 25 has a tread pattern comprising a series of lateral and circumferential grooves. The tread is conventionally formed of a single elastomer, but may also comprise multiple elastomers, the different elastomers being arranged radially in a cap/base formation or axially to create a zoned tread.

In accordance with one embodiment of the present invention, located between the carcass reinforcing ply 12 and the sidewall wedge insert 20 is an elastomeric layer 28. Formulated as a elastomeric component, the layer 28 acts as a barrier gum strip to reduce abrasion and penetration of carcass ply 12 into sidewall wedge insert 20 due to excess stress during a deflation event. The elastomer layer 28 is compounded from an elastomeric base.

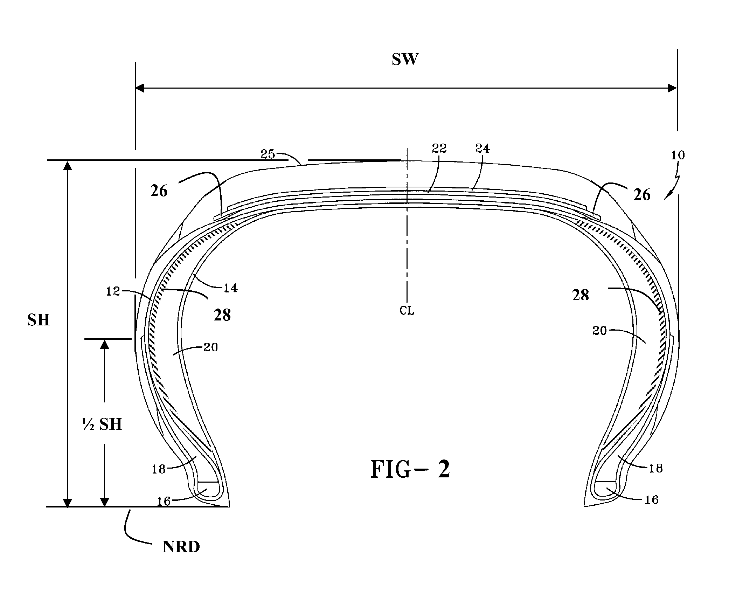

To achieve the desired effect, in one embodiment as shown in FIG 1, the elastomer layer 28 extends at least from axially inward of belt package edge 26 to at least a sidewall midpoint approximately at the one-half section height (½ SH). In another embodiment as shown in FIG 2, the elastomer layer 28 extends at least from axially inward of belt package edge 26 to axially inward of the apex 18.

The thickness of the elastomeric layer 28 ranges from 0.5 mm to 2 mm. In another embodiment, the thickness of the elastomeric layer 28 ranges from 0.8 mm to 1.2 mm.

The tire 10 may generally be of a range of aspect ratio, as defined herein. In one embodiment, the aspect ratio is at least 0.5, or 50 percent.

The elastomer layer 28 comprises an elastomeric rubber compound. The elastomer rubber compound will have a hot rebound of at least 85, a cold rebound of at least 78, a Shore A hardness ranging from 60 to 65, and an elongation at break of at least 200 percent.

The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition", "compounded rubber" and "rubber compound" are used interchangeably to refer to rubber which has been blended or mixed with various ingredients and materials. The term "phr" as used herein, and according to conventional practice, refers to "parts by weight of a respective material per 100 parts by weight of rubber, or elastomer."

The rubber composition contains a rubber containing olefinic unsaturation. In one embodiment, the rubber is natural rubber (NR) or synthetic polyisoprene (IR, including cis 1,4-polyisoprene). The rubber may also include from 10 to 20 phr of polybutadiene rubber (BR) (including cis 1,4-polybutadiene). BR can be prepared, for example, by organic solution polymerization of 1,3-butadiene. The BR may be conveniently characterized, for example, by having at least a 90 percent cis 1,4-content.

The rubber composition comprises a polyoctenamer. Suitable polyoctenamer may include cyclic or linear macromolecules based on cyclooctene, or a mixture of such cyclic and linear macromolecules. Suitable polyoctenamer is commercially available as Vestenamer 8012 or V6213 from Degussa AG High Performance Polymers. Vestenamer is a polyoctenamer produced in a methathesis reaction of cyclooctene. In one embodiment, the octenamer has a weight averaged molecular weight of 90,000 to 110,000; a glass transition temperature of from -65°C to -75°C; a crystalline content of from 10 to 30 percent by weight; a melting point of from 36°C to 54°C; a thermal decomposition temperature of from 250°C to about 275°C; a cis/trans ratio of double bonds of from 20:80 to 40:60; and Mooney viscosity ML 1 +4 of less than 10.

In one embodiment, polyoctenamer is added in an amount ranging from 1 to 20 phr. Alternatively, from 5 phr to 15 phr polyoctenamer is added to the rubber composition.

In addition to the polyoctenamer and rubber containing olefinic unsaturation in the rubber component of the tire, silica is present. The amount of silica may range from 15 to 40 phr. Preferably, the silica is present in an amount ranging from 20 to 35 phr.

The commonly-employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate.

Such conventional silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930).

The conventional silica may also be typically characterized by having a dibutylphthalate (DBP) absorption value in a range of 100 to 400, and more usually 150 to 300.

Various commercially available silicas may be used, such as, only for example herein, and without limitation, silicas commercially available from PPG Industries under the Hi-Sil trademark with designations 210, 243, etc; silicas available from Rhone-Poulenc, with, for example, designations of Z1165MP and Z165GR and silicas available from Degussa AG with, for example, designations VN2 and VN3, etc.

The rubber composition preferably substantially excludes carbon black as a filler. By substantially excludes, it is meant that carbon black is not included in the composition in amounts effective as a filler. However, some amount of carbon black may be present either as a contaminant or as a carrier for coupling agents such as sulfur containing organosilicon compounds. In such cases, the amount of carbon black will be less than 5 phr, and preferably less than 3 phr such as less than 1.5 phr or even 0.5 phr.

It may be preferred to have the rubber composition for use in the tire component to additionally contain a conventional sulfur containing organosilicon compound. Examples of suitable sulfur containing organosilicon compounds are of the formula:

Z-Alk-Sₙ-Alk-Z

in which Z is selected from the group consisting of 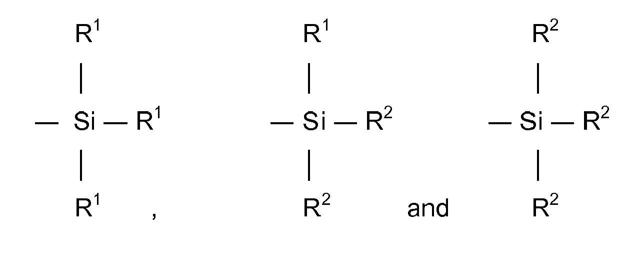 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

The preferred sulfur containing organosilicon compounds are the 3,3'-bis(trimethoxy or triethoxy silylpropyl) sulfides. The most preferred compounds are 3,3'-bis(triethoxysilylpropyl) disulfide and 3,3'-bis(triethoxysilylpropyl) tetrasulfide. Therefore as to the above formula, preferably Z is 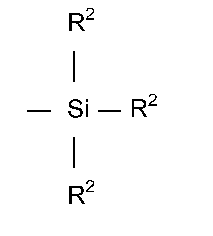 where R² is an alkoxy of 2 to 4 carbon atoms, with 2 carbon atoms being particularly preferred; alk is a divalent hydrocarbon of 2 to 4 carbon atoms with 3 carbon atoms being particularly preferred; and n is an integer of from 2 to 5 with 2 and 4 being particularly preferred.

The amount of the sulfur containing organosilicon compound of the above formula in a rubber composition will vary depending on the level of other additives that are used. Generally speaking, the amount of the compound of the above formula will range from 0.5 to 20 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr. Typical amounts of processing aids comprise 1 to 50 phr. Such processing aids can include, for example, aromatic, naphthenic, and/or paraffinic processing oils. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 10. In addition, delayed action accelerators may be used which are not affected by normal processing temperatures but produce a satisfactory cure at ordinary vulcanization temperatures. Vulcanization retarders might also be used. Preferably, the primary accelerator is a sulfenamide. If a second accelerator is used, the secondary accelerator is preferably a guanidine, dithiocarbamate or thiuram compound.

Suitable antireversion agents as are known in the art may be used in an amount of 1 to 10 phr, including 1,3-bis(citraconimidomethyl)benzene and the like.

The mixing of the rubber composition can be accomplished by methods known to those having skill in the rubber mixing art. For example the ingredients are typically mixed in at least two stages, namely at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber and compound is mixed in one or more non-productive mix stages. If the rubber composition contains a sulfur containing organosilicon compound, one may subject the rubber composition to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

Vulcanization of the pneumatic tire of the present invention is generally carried out at conventional temperatures ranging from 100°C to 200°C. Any of the usual vulcanization processes may be used such as heating in a press or mold, heating with superheated steam or hot air.

The invention is further illustrated by the following non-limiting examples.

### EXAMPLE 1

In this Example, a rubber composition for use in the tire of the present invention is illustrated.

Rubber compositions containing the materials set out in Table 1 was prepared using multiple stages of addition (mixing); at least one non-productive mix stage and a productive mix stage. The non-productive stages were mixed for 2 minutes at a rubber temperature of 160°C. The drop temperature for the productive mix stage was 115°C. The rubber compositions are identified as Sample 1 through Sample 2. The Samples were cured at 160°C for 20 minutes. Table 2 illustrates the physical properties of the cured Samples 1 and 5. Samples were tested according to the following protocols:
Zwick Rebound : ASTM D1054, DIN 53512
RPA 2000 : ASTM D5289
MV2000 Plasticity : ASTM D1646, DIN 53523
MDR 2000 : ASTM D2084 , D5289
Green Strength: ASTM 6746-03
Tensile Test for Rubber: D412

**Table 1**

| Rubber Compound Recipe (amounts in phr) | | |
|---|---|---|
| **Sample No.** | **1** | **2** |
| ***Non-Productive Mix*** | | |
| Natural Rubber | 80 | 80 |
| Cis-1,4 polybutadiene¹ | 20 | 20 |
| Silica² | 25 | 28 |
| Coupling Agent³ | 8.83 | 8.83 |
| Stearic Acid | 1 | 1 |

| ***Productive Mix*** | | |
|---|---|---|
| Zinc Oxide | 5 | 5 |
| Accelerators⁴ | 6.25 | 6.25 |
| Antioxidant⁵ | 3.25 | 3.25 |
| Sulfur | 4.12 | 4.12 |
| Polyoctenamer⁶ | 0 | 15 |

| | | |
|---|---|---|
| ¹Budene 1207 from The Goodyear Tire & Rubber Company ²Zeosil 1165 MP from Rhone Poulenc Company ³50 percent organosilicon sulfide type on carbon black carrier, X50S from Degussa ⁴sulfenamide and thiuram type ⁵p-phenylenediamine type ⁶Vestenamer 8012 from Degussa GmbH | | |

**Table 2**

| **Samples** | | **1** | | | **2** | |
|---|---|---|---|---|---|---|
| Polyoctenamer, phr | | 0 | | | 15 | |
| Mooney viscosity (ML 1+1.5 @100°C) | | 30 | | | 24 | |

| ***RPA2000 100 C (191 °C @1.67 Hz)*** | | | | | | |
|---|---|---|---|---|---|---|
| G' (15%) Green, MPa | | 0.15 | | | 0.12 | |
| G'(1%),MPa | | 1.41 | | | 1.38 | |
| G'(15%), MPa | | 1.29 | | | 1.28 | |
| G'(50%), MPa | | 1.16 | | | 1.15 | |
| G"(10%), MPa | | 0.011 | | | 0.012 | |
| Tan del (10%) | | 0.013 | | | 0.014 | |

| ***MDR2000 Light Tire (150°C)*** | | | | | | |
|---|---|---|---|---|---|---|
| Maximum, dNm | | 1.74 | | | 1.42 | |
| Amount, dNm | | 24.5 | | | 23 | |
| T25, minutes | | 11 | | | 11.4 | |
| T90, minutes | | 24 | | | 28 | |

| ***Tensile*** | | | | | | |
|---|---|---|---|---|---|---|
| Elongation at Break, % | | 238 | | | 262 | |
| 100% modulus, MP | | 3 | | | 2.8 | |
| 300% modulus, MPa | | 7.8 | | | 7.2 | |
| Rebound, % | | 81 | | | 79.3 | |
| Shore | | 62 | | | 63 | |
| Tensile Strength, MPa | | 10.5 | | | 10.9 | |
| Zwick Rebound (100°C), % | | 87 | | | 86.7 | |

| ***Green Strength*** | | | | ***Relative Index*** | | |
|---|---|---|---|---|---|---|
| Green Strength | 0.19 | | 1.39 | 100 | | 250 |
| Elongation at Break, % | 1199 | | 1360 | 100 | | 110 |
| Tensile Strength, MPa | 0.4 | | 1.19 | 100 | | 330 |
| True Tensile, MPa | 4.4 | | 16 | 100 | | 360 |
| Energy | 2.1 | | 4.4 | 100 | | 209 |

**Table 3**

| | Control | Invention |
|---|---|---|
| Sample | 1 | 2 |
| ISO Lab Runflat Test | 100 | 105 |
| Processing | 100 | 120 |

The inventive tires were subjected to a runflat test to compare the tires' runflat abilities compared to the control tire. The lab runflat test, operated at 38° C, involved deflating the tires, loading the tires with an initial load equal to 55% of the tires' rated load carrying capacity, and running the tires at 88 kph. After a warm-up period of 176 km, the tire load is increased 5% every 88 km until the tires' runflat capacity is determined. The lab runflat test shows that the tires comprising the elastomeric layer were capable of achieving superior run-flat distances to the control/conventional run-flat tire. The numbers reported in Table 3 are normalized milages, where the mileage of the control tire is normalized at 100. The processing of sample 2 is also significantly improved in accordance with the increased green strength.

## Claims

1. A pneumatic run-flat tire comprising at least one carcass reinforcing ply (12), at least one pair of sidewall inserts (20), and a belt reinforcing structure (22, 24), at least one pair of elastomeric layers (28) each located radially inward of the at least one carcass reinforcing ply (12) and radially outward of each of the sidewall inserts (20); the elastomeric layers (28) extending from axially inward of an edge of the belt reinforcing structure (26) to at least a midpoint of a sidewall, the elastomeric layers (28) comprising a rubber composition comprising 100 parts by weight of a rubber selected from natural rubber and synthetic polyisoprene from 15 to 40 phr of silica; and from 1 to 20 phr of polyoctenamer.

2. The tire of claim 1 wherein each elastomeric layer (28) is directly adjacent to the at least one carcass reinforcing ply (12) and the sidewall insert (20).

3. The tire of claims 1 or 2, wherein the rubber composition comprises from 5 to 15 phr of polyoctenamer.

4. The tire of at least one of the previous claims, wherein the rubber composition has a hot rebound of at least 85, a cold rebound of at least 78, a Shore A hardness ranging from 60 to 65, and an elongation at break of at least 200 percent.

5. The tire of at least one of the previous claims, wherein the elastomeric layers (28) each extend from axially inward of an edge of the belt reinforcing structure (26) to axially inward of a respective apex (18).

6. The tire of at least one of the previous claims, wherein the rubber composition comprises from 20 to 35 phr of silica.

7. The tire of at least one of the previous claims, wherein the rubber composition comprises from 10 to 20 phr of polybutadiene.

8. The tire of at least one of the previous claims, wherein the elastomeric layer (28) has a thickness ranging from 0.5 mm to 2 mm.

9. The tire of any of at least one the previous claims, wherein the tire has an aspect ratio of at least 50 percent.

10. The tire of at least one of the previous claims wherein the rubber composition is substantially exclusive of carbon black.
